(19) Europäisches Patentamt
European Patent Office
Office européen des brevets

(11) Numéro de publication: **0 028 178**
**A1**

(12) **DEMANDE DE BREVET EUROPEEN**

(21) Numéro de dépôt: **80401453.8**

(22) Date de dépôt: **10.10.80**

(51) Int. Cl.³: **H 02 J 13/00**

(30) Priorité: **24.10.79 FR 7926366**

(43) Date de publication de la demande: **06.05.81**
**Bulletin 81/18**

(84) Etats contractants désignés: **CH DE GB IT LI**

(71) Demandeur: **ENERTEC SOCIETE ANONYME, 12, Place des Etats Unis, F-92120 Montrouge (FR)**

(72) Inventeur: **de Montgolfier, Arnaud, Bois Joli, 86800 St. Julien l'Ars (FR)**
Inventeur: **Laprie, Marc, 24 Résidence de Beauvallée, 86130 Jaunay Clan (FR)**

(74) Mandataire: **Bentz, Jean-Paul, GIERS SCHLUMBERGER 12, Place Des Etats Unis, F-92124 Montrouge Cedex (FR)**

(54) **Relais et procédé de télécommande.**

(57) L'invention est relative aux relais de télécommande centralisée.

Un relais de télécommande centralisée comporte des moyens de contrôle, éventuellement programmés (600 à 634 de 2 en 2), pour retarder la mise en œuvre d'une commande jusqu'à la fin d'un intervalle de temps prédéterminé $nT_1$ suivant la réception de cette commande par ledit relais; éventuellement pour exécuter ensuite la commande complémentaire automatiquement au bout d'un intervalle de temps prédéterminé supplémentaire $T_1$; et, éventuellement, pour répéter la séquence précédente de manière cyclique.

Application à l'application progressive des charges électriques sur un réseau.

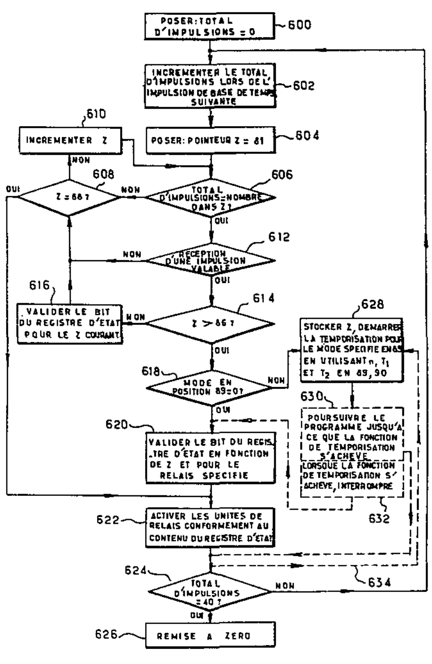


EP 0 028 178 A1

0028178



TITRE MODIFIÉ
voir page de garde

# RELAIS DE TELECOMMANDE

La présente invention est relative aux relais de télécommande permettant d'effectuer une opération en réponse à un signal de commande, sous la forme d'une tension alternative pulsée, superposée à une tension alternative d'alimentation en puissance dans un réseau de distribution d'énergie électrique.

Dans des relais de télécommande connus, tels que ceux qui sont décrits par exemple dans la demande de Brevet Français publiée sous le n° 2396447, l'opération recherchée est effectuée dès la réception du signal de commande de tension pulsée.

Conformément à un aspect de la présente invention, il est prévu un relais de télécommande pour effectuer une opération en réponse à un signal de commande, prenant la forme d'une tension alternative superposée à une tension alternative d'alimentation en puissance dans un réseau de distribution d'énergie électrique, caractérisé en ce que le relais est agencé de façon à retarder la mise en oeuvre de l'opération pendant une période de temps prédéterminé suivant la réception dudit signal de commande.

Avec un tel relais, il est possible de faire effectuer la même opération par des groupes de relais différents après l'écoulement d'intervalles de retard différents. Ainsi, si l'opération consiste, par exemple, dans l'allumage d'une lampe d'éclairage public, l'augmentation globale de charge sur le réseau de distribution d'énergie peut être effectuée de manière progressive.

En outre, le relais peut être agencé pour effectuer l'opération inverse, au bout d'un intervalle de temps prédéterminé supplémentaire en sorte que les différents groupes de relais peuvent être commandés pour effectuer l'opération à des instants différents, ce qui permet de limiter l'augmentation totale de la charge.

Pour mieux faire comprendre l'invention on va maintenant décrire à titre d'exemple non limitatif un relais de télécommande conforme à l'invention en se référant aux dessins annexés, dans lesquels :

- la fig. 1 est un schéma sous forme de blocs illustrant le principe de fonctionnement du relais,
- la fig. 2 représente des courbes de réponse en fréquence illustrant le fonctionnement du relais,
- la fig. 3 est un circuit diagramme d'un générateur d'impulsions utilisé dans une forme du relais de la fig. 1,
- la fig. 4 est un organigramme représentant le fonctionnement d'un microprocesseur utilisé dans une autre forme du relais de la fig. 1,
- la fig. 5 est une représentation d'une partie de la mémoire de ce microprocésseur,
- la fig. 6 est un organigramme d'une autre partie du fonctionnement du microprocesseur,
- la fig. 7 est une représentation d'une autre partie de la mémoire du microprocesseur,
- la fig. 8 représente un registre d'état associé au microprocesseur, et,
- la fig. 9 est un diagramme temporel illustrant divers modes de fonctionnement de l'autre forme du relais.

Le relais représenté dans la figure 1 est décrit en très grand détail dans le fascicule du Brevet Français n° 2 396 447 de sorte qu'on ne le décrira que très succinctement dans le présent mémoire.

En se référant à la figure 1, une borne d'entrée 10 d'un circuit d'alimentation et de protection 40 est branchée pour recevoir la tension du réseau de distribution d'énergie électrique, dans laquelle des instructions sont transmises par des impulsions de tension de télécommande qui sont superposées à la tension d'alimentation du réseau et qui doivent être détectées et exécutées de façon appropriée par le relais. Le circuit 40 filtre la tension du réseau de façon à éliminer les surtensions et les transitoires, et produit les tensions d'activation servant au reste du relais. En particulier, le circuit 40 fournit une alimentation alternative à 220 V aux unités de relais d'un circuit 42 et un signal à basse tension à 50 Hz (nominale) à un circuit de déclenchement 44 qui, à partir de celui-ci, produit un signal d'horloge à la fréquence du réseau d'alimentation.

L'alimentation à 220 V du circuit de relais 42 (essentiellement l'alimentation du réseau filtrée pour protéger le circuit comme décrit ci-dessus) est également reliée à un filtre passe-bande 50 constituant l'entrée du circuit d'extraction et de détection du signal de télécommande à 175 Hz. Le filtre passe-bande 50 atténue par rapport aux signaux à la fréquence de télécommande de 175 Hz, la fréquence du réseau d'alimentation de 50 Hz et ses harmoniques impairs d'ordre élevé (en particulier le 11ème et le 13ème).

Le circuit d'extraction du signal de télécommande comporte un mélangeur 52 et un filtre passe-bas 54. Le mélangeur 52 (par exemple, un simple commutateur MOS utilisé comme découpeur) répond à des impulsions fournies par un générateur d'impulsions 57 en mélangeant le signal sortant du filtre passe-bande 50 à un signal de référence à une fréquence voisine, mais non égale, de 175 Hz. Le spectre de sortie du mélangeur 52 comprend un signal de battements à la fréquence différentielle entre la fréquence du signal de référence et la fréquence de télécommande, correspondant au signal de tension de télécommande décalé vers une très basse fréquence (1,5 à 2,5 Hz). Le filtre passe-bande 54 est accordé pour transmettre cette très basse fréquence et éliminer les fréquences plus élevées, y compris la fréquence du réseau d'alimentation, la fréquence de la tension de télécommande et la fréquence du signal de référence.

Le signal de sortie du filtre passe-bas 54 comprenant une oscillation à 1,5 - 2,5 Hz lorsqu'il existe un signal à la fréquence de 175 Hz sur la forme d'onde du réseau d'alimentation, est transmis à un comparateur double 60 et à une porte à séquences 62 qui exécutent ensemble la surveillance d'amplitude et la détection de franchissements pour détecter la présence de l'oscillation à 1,5 - 2,5 Hz.

La porte à séquences 62 fournit un signal de détection sur un conducteur 90 à un détecteur à fenêtre 72 lorsqu'un signal à 175 Hz de durée suffisante pour constituer une impulsion de démarrage au début d'un train d'impulsions de télécommande, ou une impulsion de commande à l'intérieur de ce train, est détecté. En outre, dans le cas d'une impulsion de démarrage (c'est-à-dire lorsque le circuit est au repos), la porte à séquences 62 produit un signal sur un conducteur 91 pour déclencher un circuit de base de temps 70. La porte à séquences 62 produit aussi un signal sur un conducteur 93 chaque fois qu'un signal d'amplitude suffisante pour constituer un signal dérivé du signal de télécommande est présent à la sortie du filtre passe-bas 54, et un signal sur le conducteur 94 si une impulsion provoquant la fourniture d'un signal de déclenchement sur le conducteur 91 ne remplit pas toutes les conditions exigées pour une impulsion de démarrage valable.

Après avoir été déclenché, le circuit de base de temps 70 produit des impulsions de base de temps sur un conducteur 92 pour marquer l'instant où il est prévu que se produise chacune des impulsions possibles du train d'impulsions de télécommande superposé à la tension du réseau à 50 Hz, et coordonne le fonctionnement d'un compteur-comparateur 80 relié au conducteur 92. Cependant, si le circuit 70 reçoit un signal par l'intermédiaire du conducteur 94, son fonctionnement est immédiatement interrompu et le relais est remis au repos.

Au début de chaque impulsion de base de temps, le circuit de base de temps 70, produit également une impulsion de fenêtre de télécommande sur un conducteur 95a suivi d'une impulsion de fenêtre de vérification sur un conducteur 95b. Ces impulsions sont reçues par le détecteur de fenêtre 72 qui y répond en acceptant tout signal de détection sur le conducteur 97 sous réserve qu'aucun signal de télécommande ne soit présent (indiqué par un signal sur le conducteur 93) pendant l'impulsion de fenêtre de vérification suivante. Le conducteur 93 est également relié au circuit de base de temps 70 qui interrompt son propre fonctionnement si un signal apparaît sur ce conducteur 93 alors que le circuit 70 est en train de produire la première impulsion de fenêtre de vérification. Ces diverses vérifications sont prévues pour protéger le relais contre tout fonctionnement parasite en réponse à des transitoires et à des signaux parasites à 175 Hz.

Les impulsions de base de temps sur le conducteur 92 sont comptées par un premier étage 80a du circuit compteur et comparateur 80 qui compare le total à un nombre prédéterminé dans une mémoire de présélection 82. Si une impulsion de déblocage est présente sur le conducteur 97 lorsque le total est égal au nombre prédéterminé, une porte 84 est ouverte par l'étage 80a de façon à transmettre les impulsions de déblocage suivantes par un conducteur 98 à un second étage 80b. Cet étage 80b compte des groupes de cinq impulsions de base de temps et compare le nombre total de groupes à deux nombres X et Y dans une autre mémoire 86 pour déterminer si chacune des impulsions de déblocage est destinée à faire fonctionner ce relais particulier. Ainsi, lorsque le total de groupes est égal au nombre X, l'étage 80b relie le conducteur 98 à deux portes 88a et 88b, de sorte que toute impulsion de déblocage se présentant pendant ce groupe d'impulsions de base de temps est appliquée sur les portes 88a et 88b. De même, le conducteur 98 est relié à deux autres portes 88c et 88d lorsque le total de groupes est égal au nombre Y. Les portes 88a et 88d sont successivement ouvertes pendant chaque groupe d'impulsions de base de temps pour diriger toute impulsion de déblocage de façon à ce qu'elle ouvre ou ferme l'une des unités de relais ou les deux dans le circuit de relais 42, suivant le cadencement de l'impulsion de déblocage et d'un signal sur une entrée A/B vers les portes 88.

Un signal de remise à zéro de la porte à séquences 62, du détecteur à fenêtre 72 et du circuit compteur-comparateur 80 est fourni par le circuit de base de temps 70 sur un conducteur 96 lorsque le relais est alimenté ou réalimenté (en réponse à un signal RI provenant de l'unité 40) ; quand le relais aura compté quarante fenêtres temporelles de signal de commande après une impulsion de démarrage ; ou lorsque le fonctionnement du circuit de base de temps 70 s'interrompt prématurément comme décrit plus haut.

A l'exception du générateur d'impulsions 57, les circuits détaillés des unités représentées dans la figure 1, sont décrits dans le Fascicule du Brevet Français mentionné ci-dessus. Bien que la figure 1 ait été représentée et décrite sous forme de blocs de circuits individuels séparés, on notera que les fonctions des circuits se trouvant à l'intérieur du rectangle 99 peuvent être réalisées par un microprocesseur convenablement programmé, ce qui permet d'incorporer davantage d'unités de relais dans le circuit de relais 42 et d'étendre considérablement les modes d'exécution des signaux de commande par le relais, comme décrit ci-après. A cet égard, la demande de Brevet Français n° 79 03 357 décrit une version du mélangeur 52 et du générateur d'impulsions 57 dans laquelle un microprocesseur effectue la fonction du générateur d'impulsions 57.

Dans les deux publications mentionnées ci-dessus, la fréquence constante du signal de référence a une valeur unique prédéterminée à tout instant. Par conséquent, la réponse en fréquence de circuits tels que le mélangeur 52 et le filtre passe-bas 54 de la plus récente de ces publications, vis-à-vis du signal de commande, est telle que représentée dans la figure 2 (a).

En se référant à la figure 2 (a), la réponse principale est un lobe à bords verticaux centré sur la fréquence $F_C$ du signal de commande et s'annulant à la fréquence $F_R$ du signal de référence. Il existe cependant un second lobe image du premier dans un miroir, centré sur une fréquence $F_I$ telle que :

$$F_R - F_I = F_C - F_R = f$$

Ainsi, le relais a la possibilité de répondre à du bruit ou à d'autres signaux parasites à une fréquence voisine de $F_I$ comme s'il s'agissait de signaux de commande véritables à la fréquence de télécommande $F_R$.

Pour éviter l'éventualité d'un tel fonctionnement intempestif, le générateur d'impulsions 57 est agencé de la façon représentée dans la figure 3. Dans cette figure, le générateur d'impulsions 57 comprend un oscillateur 571 qui alimente deux diviseurs 572 et 573. Ces diviseurs 572 et 573 divisent le signal provenant de l'oscillateur 571 pour produire des signaux de sortie à 173 Hz et 177 Hz respectivement, ces signaux étant envoyés vers des portes ET respectives 574 et 575. Les portes ET 574 et 575 sont quant à elles, reliées par une porte OU 576 au mélangeur 52. La sortie Q d'un bistable 577 est branchée pour débloquer la porte ET 575 tandis que sa sortie $\overline{Q}$ est prévue pour débloquer la porte ET 574. Le bistable est basculé par tous les signaux de détection se présentant sur le conducteur 90 et remis à l'état initial par les signaux de remise à l'état initial se présentant sur le conducteur 96.

Pendant que le système fonctionne au repos, lorsqu'aucun train d'impulsions de signal de commande n'est reçu, le bistable est dans son état initial, débloquant ainsi la porte ET 574 de sorte que le mélangeur 52 reçoit le signal de référence à 173 Hz provenant du diviseur 572. La réponse en fréquence est telle que décrite ci-dessus et représentée dans la figure 2 (a). Cependant, lorsqu'une impulsion de démarrage est reçue, une impulsion de détection apparaît sur le conducteur 90 et bascule le bistable 577. La porte ET 574 est alors bloquée et la porte ET 575 est débloquée de telle sorte que la fréquence du signal de référence passe de 173 Hz à 177 Hz. Par conséquent, la réponse en fréquence est remplacée par celle de la figure 2 (b). L'un des lobes de la réponse reste centré sur la fréquence de télécommande $F_C$, mais la fréquence image $F_I$ s'est maintenant décalée de $F_C - 2f$ à $F_C + 2f$. La fréquence du signal de référence $F_R$ reste à 177 Hz jusqu'à la fin du train d'impulsions de signal de commande, quand un signal de remise à zéro se présente sur le conducteur 96 pour remettre le bistable 577 dans son état initial et ramener la fréquence du signal de référence à 173 Hz.

Ainsi, les éventuels signaux parasites à ou proches de 171 Hz ($F_I$ dans la figure 2 (a)) pourront seulement amorcer un cycle de fonctionnement du relais étant donné que la courbe de réponse en fréquence a été remplacée par celle représentée dans la figure 2 (b), rendant le relais insensible à d'autres signaux à 171 Hz. Après quoi, le relais compte simplement 40 impulsions de base de temps et se remet au repos sans changer l'état des unités de relais 42 (étant donné qu'un tel changement nécessiterait la réception d'une impulsion de signal de commande pendant l'une des impulsions de base de temps). De même, un signal parasite à environ 179 Hz ($F_I$ dans la figure 2 (b)) ne pourra même pas déclencher un cycle de fonctionnement étant donné que sa fréquence est en dehors de la gamme de réponse du relais lorsqu'il fonctionne au repos (figure 2 (a)). Cependant, tous les signaux de commande véritables à 175 Hz pourront toujours faire fonctionner le relais puisqu'ils seront toujours compris dans la gamme de réponse relais (lobe de fréquences supérieures dans la figure 2 (a) et lobe de fréquences inférieures dans la figure 2 (b)).

Au cas où l'on utiliserait un microprocesseur pour réaliser les fonctions des circuits contenus dans le rectangles 99 de la figure 1, et en particulier, la fonction du générateur d'impulsions 57 (comme décrit dans la Demande de Brevet Français n° 79 03 357), ce microprocesseur peut être programmé pour effectuer le changement de fréquence du signal de référence.

Dans le système décrit dans ce fascicule, un microprocesseur (MPU) est agencé de telle manière que, sous le contrôle d'un programme d'instructions enregistré dans une mémoire morte (ROM), il charge dans un compteur un nombre prédéterminé qui est stocké soit dans la mémoire morte, soit une mémoire active (RAM). Le microprocesseur continue alors à exécuter d'autres parties du programme pendant que le compteur effectue un décompte à partir de ce nombre en réponse à des impulsions d'horloge. Lorsque le compteur atteint zéro, il interrompt l'exécution du programme principal et le microprocesseur fournit un signal à une borne de sortie avec registre bloqueur et recharge le compteur. Le signal est dérivé de l'une d'un groupe de positions mémoires dans la mémoire active qui sont appelées cycliquement. La borne de sortie fournit donc un signal cyclique dont la forme d'onde dépend des valeurs continues dans ces positions mémoires et dont la fréquence dépend en partie de la grandeur du nombre prédéterminé chargé dans le compteur. Ce signal cyclique est équivalent à la sortie du générateur d'impulsions 57 et est appliqué au mélangeur 52. La séquence d'opérations du microprocesseur est illustrée dans la figure 4.

En se reportant à la figure 4, lorsqu'un signal d'interruption est reçu par le microprocesseur en provenance du compteur, comme représenté en 405 le microprocesseur appelle une position mémoire Y dans la mémoire active (voir figure 5) pour obtenir la valeur courante (comprise entre 43 et 48) d'une variable Z et la valeur enregistrée à cette adresse est transmise à la borne de sortie avec registre bloqueur. Une fois que le registre bloqueur a été débloqué, au stade 410, pour retenir cette valeur, le microprocesseur effectue un test en 412 pour déterminer si la valeur maximale de 3 (48) a été atteinte. En fonction du résultat de ce test, Z est soit incrémenté de 1 (opération 414) soit ramené à 43 (opération 416), et la nouvelle valeur de Z est enregistrée à l'adresse Y (opération 418). Le nombre ou total prédéterminé, qui est maintenu en position X, est alors extrait au stade 400 et transmis au compteur en 402, puis le microprocesseur recommence l'exécution du programme principal, comme indiqué en 404, jusqu'à ce que le signal d'interruption suivant fourni par le compteur déclenche de nouveau cette séquence.

La figure 4 représente également d'une manière générale, la séquence globale d'opérations du microprocesseur, y compris la transposition de la fréquence du signal de référence. Ainsi, lorsque le relais est alimenté pour la première fois (ou réalimenté après une coupure de courant), le microprocesseur exécute un programme de routine d'initialisation 420 pour s'assurer que les divers registres, etc, contiennent les bonnes valeurs prédéterminées. Le programme d'instructions de base commandant le fonctionnement du microprocesseur est contenu de façon permanente dans une mémoire morte (ROM) mais, pour permettre l'utilisation du même type de relais dans différents systèmes, certains paramètres concernant le fonctionnement du relais (tels que la composition du train d'impulsions, la fréquence de télécommande et le type de présélection), ainsi que la position de l'impulsion de signal de commande correspondant à chaque sens de fonctionnement de chaque unité de relais, sont stockés dans une mémoire morte programmable (PROM). Le relais peut donc être adapté à n'importe quel système particulier et les codes de position de l'impulsion souhaités peuvent simplement être déterminés par addition d'une mémoire morte programmable contenant les valeurs des paramètres appropriés à ce système et les codes nécessaires. Ces valeurs et ces codes sont transmis à la mémoire active pour être utilisés au stade 422. En particulier, l'adresse X de la mémoire active reçoit la valeur du total correspondant à une fréquence du signal de référence de 173 Hz et cette valeur est aussi chargée dans le compteur de façon à amorcer la production du signal de référence, au stade 424. Un temporisateur de boucle est déclenché au stade 426 puis le microprocesseur surveille (opération 428) les signaux de sortie du comparateur double 60 pour trouver la séquence de signaux correcte indiquant, comme décrit dans le Fascicule du Brevet Français n° 2 396 447, la présence d'une impulsion à 175 Hz, sur le réseau d'alimentation. Si aucun signal de télécommande représentatif d'une impulsion de démarrage n'est détecté au moyen d'un test effectué en 430, le microprocesseur passe à l'opération 432 dans laquelle il vérifie que le temporisateur de boucle déclenché en 426, indique que la durée de la boucle s'est écoulée. Dans le cas contraire, le programme répète cette boucle à partir de l'opération 428, pour vérifier de nouveau si une impulsion de démarrage est présente. Si un temps égal à la durée de la boucle s'est écoulé, le microprocesseur revient en 422 pour recharger le contenu de la mémoire morte programmable dans la mémoire active à titre de précaution contre une éventuelle perturbation des données par interférence électrique. Pendant que le microprocesseur répète la boucle 428 à 432, il est périodiquement interrompu par le compteur pour exécuter la séquence d'instructions partant de l'opération 406 pour maintenir le signal de référence à une fréquence de 173 Hz.

Quand une impulsion de démarrage est reçue, le test de l'opération 430 renvoie le programme en 434 où un nouveau nombre approprié à une fréquence du signal de référence de 177 Hz est chargé à l'adresse X. Le microprocesseur effectue alors, comme représenté de façon générale en 436, le traitement du train de signaux de télécommande faisant suite à l'impulsion de démarrage. Ce traitement consiste à surveiller les signaux de sortie du comparateur double 60 au moment où des impulsions de commande peuvent se présenter pour détecter et vérifier la durée de ces impulsions et pendant les périodes intermédiaires pour effectuer une protection contre les signaux parasites ; à décoder, en fonction de leur position dans le train d'impulsions, ces impulsions de commande au fur et à mesure qu'elles sont reçues ; et à faire fonctionner de façon appropriée les unités de relais 42 pour mettre en oeuvre les ordres décodés. Tout au long de ce traitement, le fonctionnement du microprocesseur continue à être interrompu par le compteur pour maintenir le signal de référence à une fréquence de 177 Hz compte tenu du total modifié contenu à l'adresse X de la mémoire active.

Une fois que la totalité du train d'impulsions a été reçu, le microprocesseur reprend l'exécution de la boucle 422 à 432 en attendant un autre train d'impulsions et ramène ainsi le total de l'adresse X à sa valeur initiale, pour une fréquence du signal de référence de 173 Hz.

Dans le dispositif décrit dans le Fascicule du Brevet Français n° 2 396 447, et résumé ci-dessus, tout signal de commande reçu et décodé sera immédiatement traité par le ou les relais vers lequel ou lesquels il est dirigé. Cependant, si un microprocesseur remplit les fonctions des circuits contenus dans le rectangle 99 de la figure 1, d'autres modes de fonctionnement peuvent être utilisés. La séquence d'opérations du microprocesseur est schématisée par l'organigramme représenté dans la figure 6.

En se référant à la figure 6, on suppose que le relais a détecté l'impulsion de démarrage d'un train d'impulsions de signal de commande (par exemple en 430 dans la figure 4). A ce moment, un compteur servant à compter les impulsions de base de temps (et par conséquent, à compter les éventuelles positions d'impulsions de signal de commande) est mis à zéro en 600 puis incrémenté en 602 (à une valeur initiale de 1) par la première impulsion de base de temps. Un pointeur Z est déterminé à 81 en 604 puis le contenu de la position de la mémoire active ayant l'adresse Z (initialement 81 - voir figure 7) est examiné en 606. Les adresses de la mémoire active 81 à 88 contiennent chacune un nombre respectif compris entre 1 et 40, indiquant l'une des positions de l'impulsion de commande dans le train d'impulsions. L'opération 606 consiste à comparer ce nombre au total de la position courante de l'impulsion. Si ces deux nombres ne sont pas égaux, indiquant que l'ordre enregistré à l'adresse Z ne correspond pas au total de la position courante de l'impulsion, le système passe à l'opération 608 pour tester si Z a atteint la valeur maximale de 88. Si Z n'a pas atteint 88, il est incrémenté en 610 pour tester si le total de la position courante de l'impulsion correspond à l'ordre enregistré dans la position suivante de la mémoire active.

Lorsque cette correspondance est détectée, le système passe à l'opération 612 pour déterminer si un signal de télécommande valable a été détecté à la position d'impulsion appropriée. Comme mentionné plus haut, cette opération 612 consiste à tester l'apparition et le cadencement des signaux provenant du comparateur double 60 (figure 1). Si aucune impulsion n'a été reçue, le processus est simplement ramené à l'opération 608 ; si une impulsion a été reçue, la valeur courante de Z est vérifiée en 614.

Pour une valeur de Z comprise en 81 et 86, le processus passe à l'opération 616, dans laquelle une position mémoire choisie dans un registre d'état à 6 bits (figure 8) est activée. Cette position est choisie en fonction de la valeur courante du pointeur Z de l'adresse de la mémoire active. Ainsi, par exemple, si l'adresse 83 de la mémoire active contenait 25, indiquant qu'une impulsion en position 25 dans le train d'impulsions commande l'ouverture de l'unité de relais 2 (figure 7) et qu'une impulsion de commande valable est reçue quand le total de la position de l'impulsion est de 25, les tests des opérations 606, 612 et 614 fourniraient respectivement les résultats oui, oui et non pour Z = 83. Par conséquent, le troisième bit du registre d'état serait activé (voir figures 7 et 8). Le système revient ensuite en 608.

Pour une valeur de Z égale à 87 ou à 88, le test de l'opération 614 fait passer le processus à l'opération 618 dans laquelle la position 89 de la mémoire active est examinée. Cette position contient trois types de données : l'identité de l'unité de relais à laquelle un autre mode de fonctionnement (décrit ci-dessous) peut être appliqué ; un code indiquant le mode demandé et la valeur d'une constante n. Si le code du mode est 0, indiquant que l'on ne demande qu'une exécution normale immédiate des ordres reçus (auquel cas les totaux contenus dans les positions 87 et 88 complètent simplement ceux des positions 81 à 86), le processus continue jusqu'à l'opération 620 où une position mémoire sélectionnée est activée dans le registre d'état. Comme en 616, cette position est choisie en fonction de la valeur courante de Z ; mais, en outre, l'identité du relais spécifiée à l'adresse 89 doit être prise en compte (voir figures 7 et 8).

Lorsque le test effectué en 608 indique que Z a atteint 88, ou après exécution de l'opération 620, le processus passe à l'opération 622 pour exécuter tous les ordres reçus pour le total de la position courante de l'impulsion. A cet effet, le contenu des six positions du registre d'état sont examinées tour à tour pour vérifier que des signaux d'activation sont fournis aux bornes d'entrée des trois unités de relais (dans ce cas) du circuit de relais 42 de la figure 1 afin d'exécuter les ordres reçus. Ainsi, pour poursuivre l'exemple donné plus haut, l'impulsion de commande en position 25 active la troisième position du registre d'état. Quand cette position est vérifiée, un signal d'activation est fourni à la borne d'entrée "d'ouverture du relais" de l'unité de relais 2 en 622 et l'unité de relais 2 est ouverte compte tenu de l'ordre reçu. Suivant la conception détaillée des unités de relais qui peuvent par exemple comprendre des thyristors ou des triacs, cette opération 622 peut aussi mettre en jeu la surveillance de la tension du réseau pour permettre de synchroniser de façon appropriée les signaux d'activation avec les demi-périodes positives et/ou négatives de la forme d'onde de la tension du réseau.

Une fois que les unités de relais ont été activées de la façon appropriée, le processus continue jusqu'à l'opération 624 où le total de la position courante de l'impulsion est testé. S'il n'a pas atteint 40, le processus revient en 602 pour incrémenter le total de la position de l'impulsion en réponse à l'impulsion de base de temps suivante. Cependant, lorsque le contenu de chacune des positions 81 à 88 de la mémoire active a été comparé à chaque total possible de la position de l'impulsion jusqu'à 40, le test effectué en 624 indique que le total final de 40 a été atteint et que le traitement du train d'impulsions (opération 436 figure 4) est achevé, et le processus ramène alors le système au repos en 626 dans l'attente d'un autre train d'impulsions.

Si le code du mode stocké dans la position 89 de la mémoire active et testé en 618 n'est pas 0, un autre mode d'exécution des ordres est alors nécessaire, pour lequel le processus passe de l'opération 618 à l'opération 628 au lieu de l'opération 620.

Un mode de fonctionnement avantageux consiste à retarder l'exécution de l'ordre reçu jusqu'à un instant prédéterminé $nT_1$ après réception de l'ordre, où n est la constante stockée dans la position 89 de la mémoire active et $T_1$ est un intervalle de temps unité prédéterminé (voir figure 9 (a)). Si on le souhaite, l'exécution de l'ordre peut être momentanée et être effectuée pendant une période $T_1$ à partir d'un temps $nT_1$ après réception de l'ordre (voir figure 9 (b)). En spécifiant un intervalle supplémentaire $T_2$, il est possible de renouveler cette exécution momentanée, au bout de temps successifs $T_2$, pendant des périodes supplémentaires $T_1$ (figure 9 (c)).

A cet effet, la mémoire active comprend une autre position (figure 7) qui est utilisée si le processus atteint l'opération 628 : cette position 90 contient les valeurs $T_1$ et $T_2$ respectivement.

Ainsi, en 628, le processus conserve tout d'abord la valeur courante de Z, examine les positions 89 et 90 puis amorce une fonction de temporisation, conformément à des techniques connues et en fonction des valeurs de n et de $T_1$ stockées dans les positions 89 et 90, avant de passer, comme indiqué en 630, à l'opération 624. Cependant, lorsque l'intervalle de temps requis s'est écoulé, un signal d'interruption est produit et le processus revient, comme indiqué en 632, à l'opération 620 où le fonctionnement dépend du mode spécifié dans la position 89. Pour une exécution retardée simple, (figure 9 (a)), la position appropriée du registre d'état serait activée en fonction de l'unité de relais identifiée en position 89 de la mémoire active, et de la valeur de Z stockée en 628 ; après quoi, en 622, le registre d'état serait utilisé pour commander l'application d'un signal d'activation sur la borne d'entrée de l'unité de relais appropriée pour exécuter l'ordre. Dans le cas d'une exécution momentanée retardée (figure 9 (b)), la même action serait exécutée, mais la fonction de temporisation serait également réamorcée pendant un temps $T_1$ comme indiqué par le trait discontinu 634. Au bout de ce temps supplémentaire, la position complémentaire du registre d'état correspondant à la même unité de relais serait activée pour ramener cette unité de relais dans son état initial. Cela se produirait également pour une exécution temporaire répétitive retardée (figure 9 (c)), et la fonction de temporisation serait de nouveau réamorcée, mais pendant un temps $T_2$ au bout duquel la séquence donnée ci-dessus serait répétée. Il est à noter que pendant le cadencement des intervalles $T_1$, $nT_1$ et $T_2$ de la façon appropriée, le système pourrait surveiller le réseau de distribution d'énergie électrique pendant d'autres trains d'impulsions, de la façon décrite ci-dessus, à propos de la figure 4, et sauterait à l'opération 620 chaque fois qu'un signal d'interruption se présenterait à la fin de chaque intervalle de temps.

L'un des avantages de l'exécution retardée des ordres est qu'en donnant différentes valeurs à n dans différentes parties du réseau, des variations de la demande en énergie peuvent être maintenues dans des limites raisonnables. Par conséquent, une exécution retardée simple (figure 9 (a)) permet d'augmenter progressivement la charge (figure 9 (d)) alors que l'exécution momentanée, qu'elle soit ou non répétitive, (figure 9 (b) et 9 (c)), permet de limiter cette augmentation à l'énergie électrique nécessaire pour n'importe quel groupe de relais ayant la même valeur de n (figure 9 (e)).

On notera que bien que l'unité de relais indiquée en position 89 de la mémoire active puisse être mise en jeu dans l'exécution retardée d'un ordre codé de façon appropriée, transmis dans un train d'impulsions de commande, cette même unité de relais peut ultérieurement permettre une exécution immédiate d'un ordre codé conformément aux totaux stockés dans les positions appropriées parmi les positions 81 à 86 de la mémoire active. En outre, l'incorporation d'une présélection (omise dans la présente description pour plus de clarté) permet des possibilités supplémentaires en ce qui concerne les permutations des ordres disponibles.

Revendications.

1. Relais de télécommande centralisé pour effectuer une opération en réponse à un signal de commande sous forme d'une tension alternative pulsée superposée à une tension alternative d'alimentation en puissance dans un réseau de distribution électrique, caractérisé par :

- des moyens conçus pour enregistrer des paramètres prédéterminés de ladite opération et dudit signal de commande, et notamment une indication d'un retard préchoisi requis entre la réception dudit signal de commande et la mise en oeuvre de ladite opération;

- des moyens sensibles auxdits moyens d'enregistrement et couplés audit réseau pour détecter la transmission d'un signal de commande conformément auxdits paramètres prédéterminés enregistrés y relatifs;

- des moyens sensibles auxdits moyens de détection et auxdits moyens d'enregistrement, conçus pour déterminer l'instant où l'intervalle de temps correspondant audit retard s'est écoulé après ladite transmission;et

- des moyens effecteurs, sensibles auxdits moyens de détermination et auxdits moyens d'enregistrement, et conçus pour effectuer ladite opération conformément auxdits paramètres prédéterminés enregistrés y relatifs.

2. Relais suivant la revendication 1, caractérisé en ce que lesdits moyens d'enregistrement sont en outre conçus pour enregistrer des paramètres prédéterminés de deux signaux de commande pour ladite opération, l'un seul de ces signaux ayant un intervalle de temps de retard associé.

3. Relais suivant la revendication 1 ou 2, caractérisé en ce que lesdits moyens d'enregistrement sont en outre conçus pour enregistrer la valeur d'une constante prédéterminée.

4. Relais suivant la revendication 3, caractérisé en ce que lesdits moyens d'enregistrement sont conçus pour enregistrer la valeur d'un intervalle de temps unité prédéterminé, ledit intervalle de temps de retard étant égal au produit de ladite constante par ledit intervalle de temps unité.

5. Relais suivant l'une quelconque des revendications précédentes, caractérisé en ce que lesdits moyens d'enregistrement sont conçus pour enregistrer une indication d'un second intervalle de temps de retard préchoisi, en ce que lesdits moyens de détermination sont en outre conçus pour déterminer l'instant où ledit second intervalle de temps de retard est écoulé après ladite opération, et en ce que lesdits moyens effecteurs sont en outre conçus pour effectuer l'opération inverse de ladite opération lorsque lesdits moyens de détermination déterminent la fin dudit second intervalle de temps de retard.

6. Relais suivant la revendication 5, caractérisé en ce que lesdits moyens d'enregistrement sont en outre conçus pour enregistrer une indication d'un intervalle de temps de retard préchoisi additionnel, en ce que lesdits moyens de détermination sont en outre conçus pour déterminer l'instant où ledit intervalle de temps de retard additionnel s'est écoulé après ladite opération inverse, et en ce que lesdits moyens effecteurs sont en outre conçus pour répéter ladite opération lorsque lesdits moyens de détermination déterminent la fin de l'intervalle de temps de retard additionnel.

7. Relais suivant l'une quelconque des revendications précédentes, caractérisé en ce que lesdits moyens d'enregistrement sont en outre conçus pour enregistrer une indication permettant de savoir si une opération retardée est requise ou non.

8. Procédé pour effectuer une opération en réponse à un signal de commande sous la forme d'une tension alternative pulsée superposée à une tension alternative d'alimentation en puissance dans un réseau de distribution d'énergie électrique, caractérisé par les opérations consistant à :

- enregistrer des paramètres prédéterminés de ladite opération et dudit signal de commande, et notamment une indication d'un intervalle de temps de retard préchoisi requis entre la réception dudit signal de commande et la mise en oeuvre de ladite opération;

- détecter la transmission dudit signal de commande conformément auxdits paramètres prédéterminés enregistrés y relatifs;

- déterminer l'instant où ledit intervalle de temps de retard est écoulé après ladite transmission, et

- à cet instant, effectuer ladite opération conformément aux paramètres prédéterminés enregistrés y relatifs.

9. Procédé suivant la revendication 8, caractérisé par l'opération consistant à enregistrer des paramètres prédéterminés de deux signaux de commande pour ladite opération, dont l'un seulement présente un intervalle de temps de retard associé.

10. Procédé suivant la revendication 8 ou 9, caractérisé par l'opération consistant à enregistrer la valeur d'une constante prédéterminée.

11. Procédé suivant la revendication 10, caractérisé par l'opération consistant à enregistrer la valeur d'un intervalle de temps unité prédéterminé, ledit intervalle de temps de retard étant égal au produit de ladite constante par ledit intervalle de temps unité.

12. Procédé suivant l'une quelconque des revendications 8 à 11, caractérisé par l'opération consistant à enregistrer une indication relative à un second intervalle de temps de retard préchoisi, à déterminer l'instant où ce second intervalle de temps de retard s'est écoulé après ladite opération, et, à cet instant, effectuer l'opération inverse de ladite opération.

13. Procédé suivant la revendication 12, caractérisé par l'opération consistant à enregistrer une indication relative à un intervalle de temps de retard préchoisi additionnel, à déterminer l'instant où ledit intervalle de temps de retard additionnel s'est écoulé après ladite opération inverse, et, à cet instant, répéter ladite opération.

14. Procédé suivant l'une quelconque des revendications 8 à 13, caractérisé par l'opération consistant à enregistrer une indication permettant de savoir si une opération retardée est requise ou non.

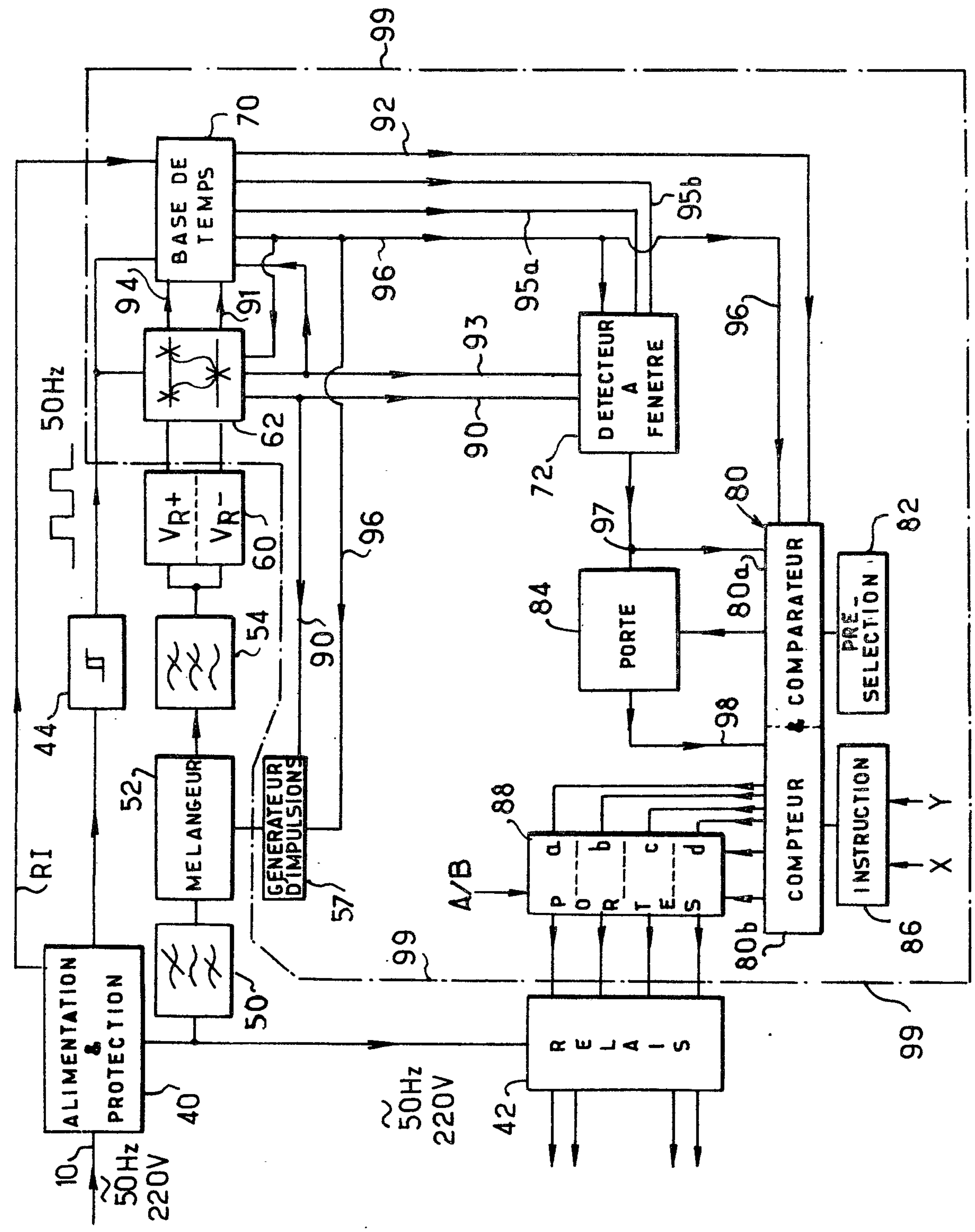
ALIMENTATION & PROTECTION
MELANGEUR
GENERATEUR D'IMPULSIONS
BASE DE TEMPS
DETECTEUR A FENETRE
PORTE
COMPARATEUR & COMPTEUR
PRE-SELECTION
INSTRUCTION
RELAIS
PORTES
a
b
c
d
$V_R+$
$V_R-$
50Hz
50Hz 220V
50Hz 220V
RI
A/B
X
Y
10
40
42
44
50
52
54
57
60
62
70
72
80
80a
80b
82
84
86
88
90
91
92
93
94
95a
95b
96
97
98
99

Fig.1

0028178

2/6

Fig. 2

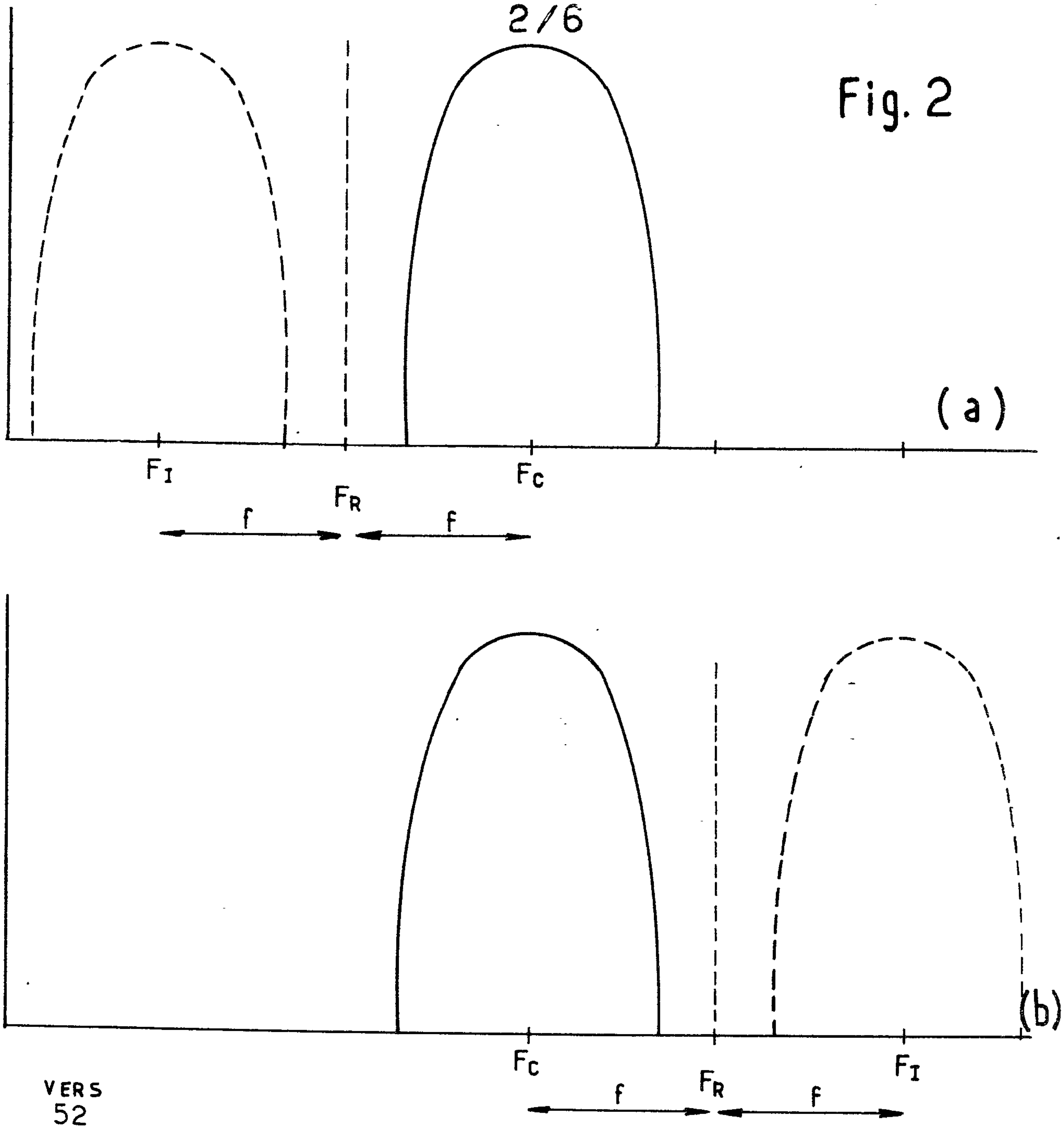


Fig. 3

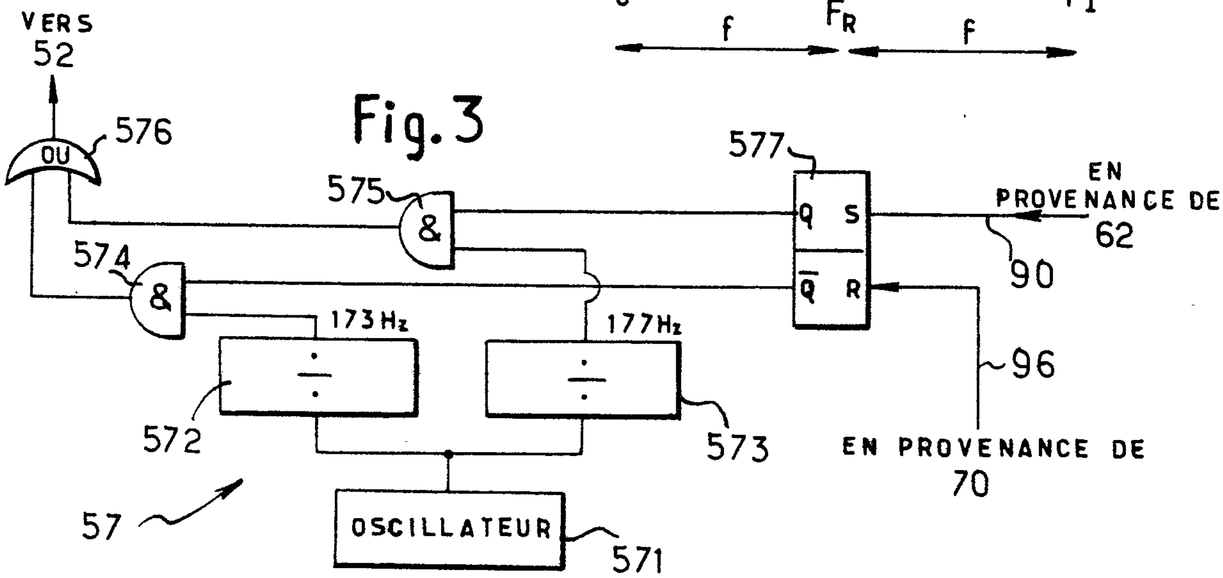

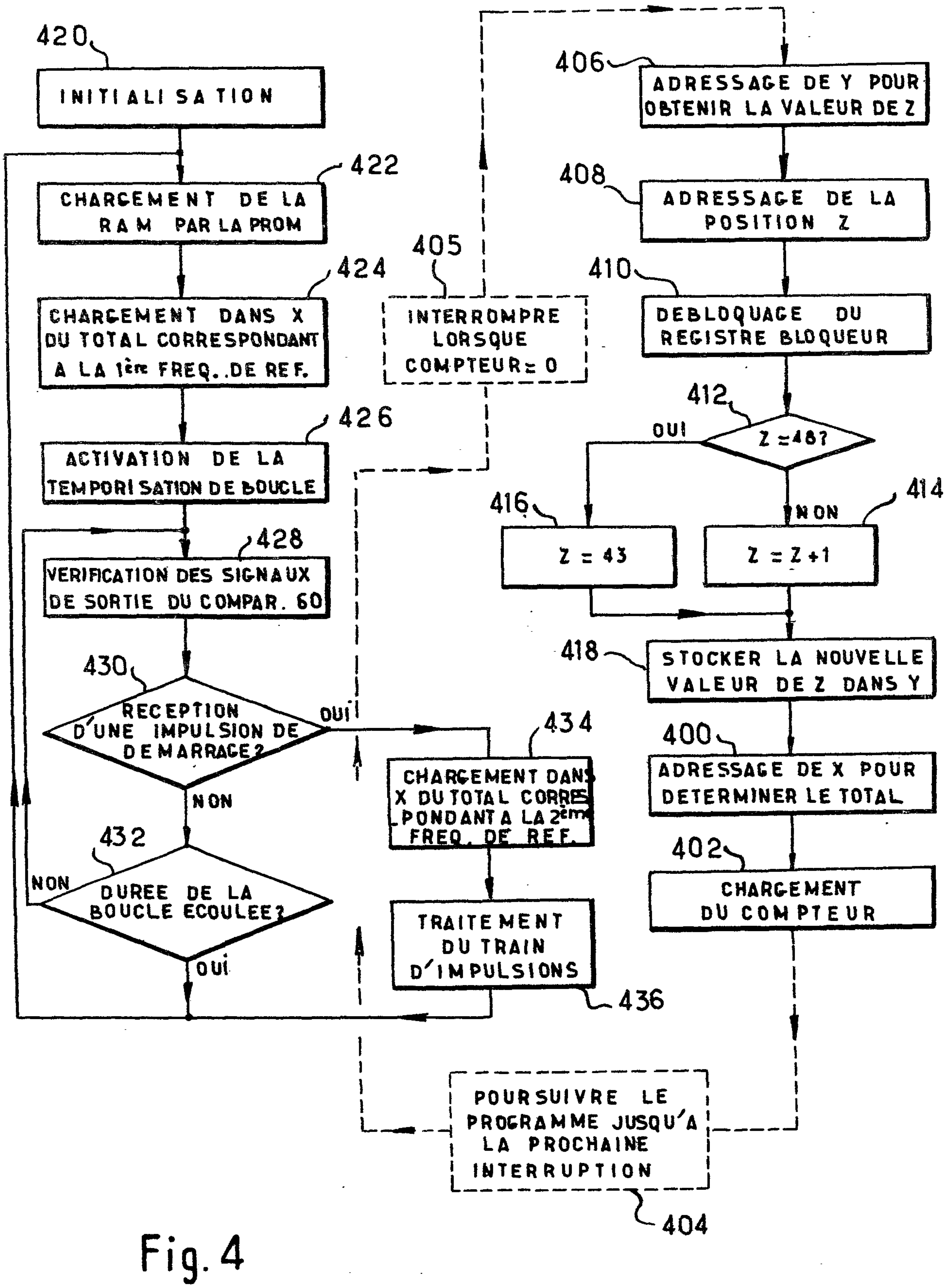
420
INITIALISATION
422
CHARGEMENT DE LA RAM PAR LA PROM
424
CHARGEMENT DANS X DU TOTAL CORRESPONDANT A LA 1ère FREQ. DE REF.
426
ACTIVATION DE LA TEMPORISATION DE BOUCLE
428
VERIFICATION DES SIGNAUX DE SORTIE DU COMPAR. 60
430
RECEPTION D'UNE IMPULSION DE DEMARRAGE?
OUI
NON
432
DUREE DE LA BOUCLE ECOULEE?
NON
OUI
434
CHARGEMENT DANS X DU TOTAL CORRESPONDANT A LA 2ème FREQ. DE REF.
TRAITEMENT DU TRAIN D'IMPULSIONS
436
405
INTERROMPRE LORSQUE COMPTEUR= 0
406
ADRESSAGE DE Y POUR OBTENIR LA VALEUR DE Z
408
ADRESSAGE DE LA POSITION Z
410
DEBLOQUAGE DU REGISTRE BLOQUEUR
412
Z =48?
OUI
NON
416
Z = 43
414
Z = Z+1
418
STOCKER LA NOUVELLE VALEUR DE Z DANS Y
400
ADRESSAGE DE X POUR DETERMINER LE TOTAL
402
CHARGEMENT DU COMPTEUR
POURSUIVRE LE PROGRAMME JUSQU'A LA PROCHAINE INTERRUPTION
404

Fig. 4

Fig.5

| RAM | |
| --- | --- |
| ADRESSE | CONTENU |
| ⋮ | |
| X | TOTAL |
| Y | Z SUIVANT |
| ⋮ | |
| 43 | 0 ------------ 0 |
| 44 | 1 ------------ 0 |
| 45 | 1 ------------ 1 |
| 46 | 1 ------------ 1 |
| 47 | 1 ------------ 0 |
| 48 | 0 ------------ 0 |
| ⋮ | |

Z (addresses 43–48)

0028178

5/6

Fig. 6

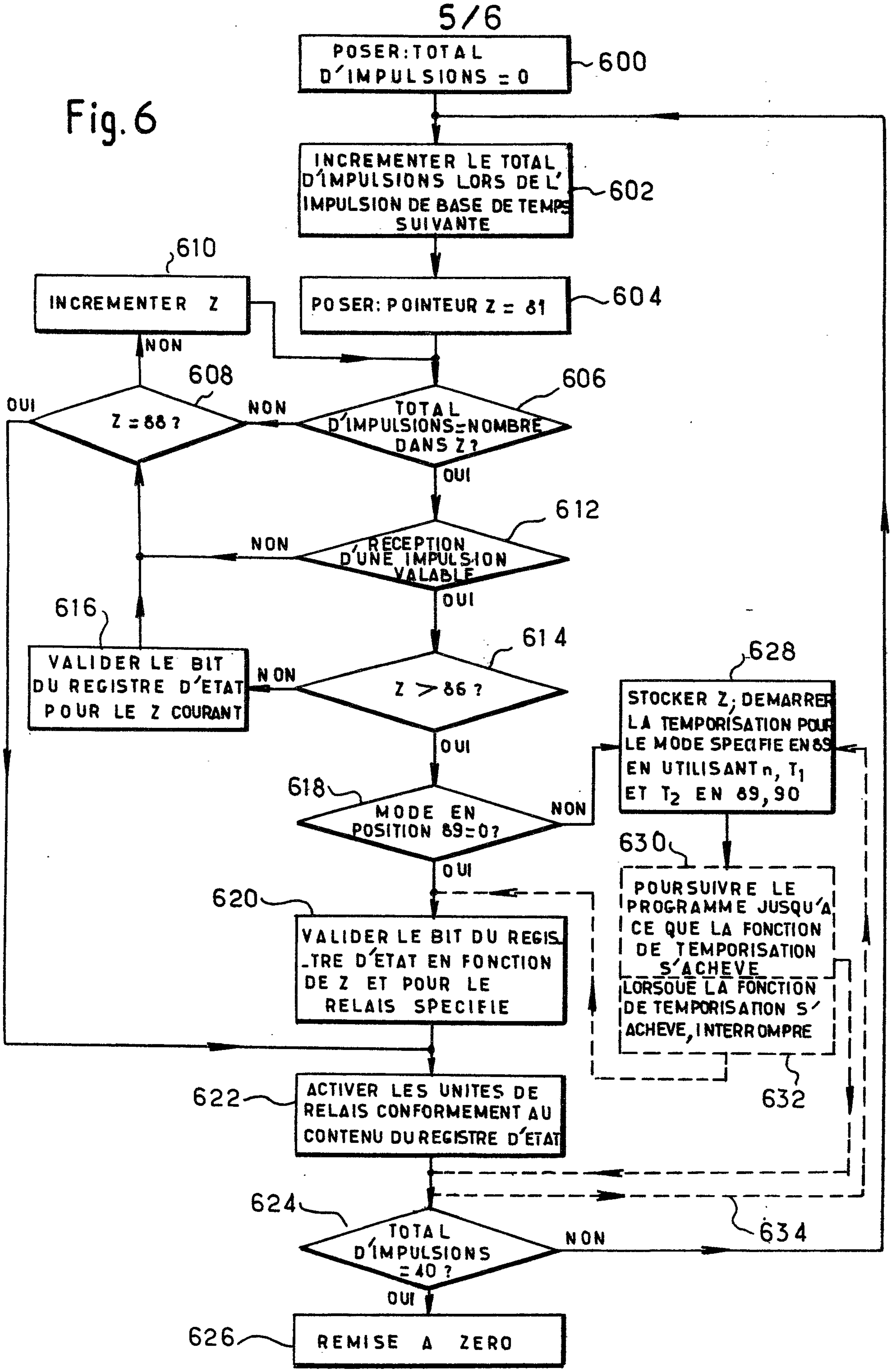

Fig. 7

| Z | | | |
|---|---|---|---|
| Z | 81 | TOTAL D'IMPULSIONS POUR LE RELAIS 1 | OUVRIR |
| Z | ' | " " " " " " | FERMER |
| Z | ' | " " " " " 2 | OUVRIR |
| Z | ' | " " " " " " | FERMER |
| Z | ' | " " " " " 3 | OUVRIR |
| Z | 86 | " " " " " " | FERMER |
| Z | 87 | TOTAL POUR LE MODE RETARDÉ | OUVRIR |
| Z | 88 | " " " " " | FERMER |
| | 89 | RELAIS \| n \| MODE | |
| | 90 | $T_1$ \| $T_2$ | |

Fig.8

| RELAIS → OPERATION → | 1 OUVRIR | 1 FERMER | 2 OUVRIR | 2 FERMER | 3 OUVRIR | 3 FERMER |
|---|---|---|---|---|---|---|
| | 0 | 0 | 0 | 0 | 0 | 0 |
| Z = | 81 (87) | 82 (88) | 83 (87) | 84 (88) | 85 (87) | 86 (88) |

Fig.9

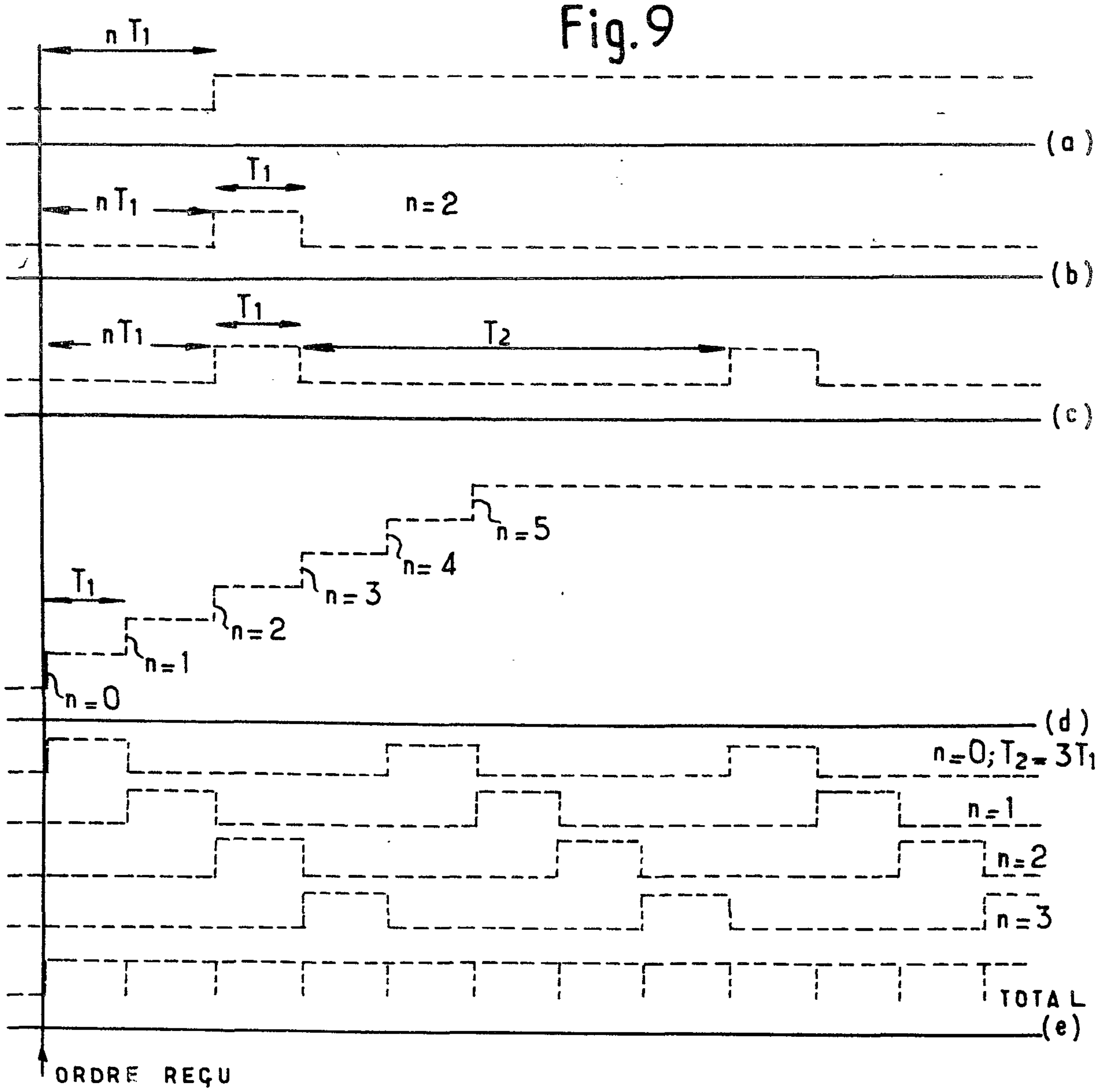

0028178

Numéro de la demande

Office européen des brevets

# RAPPORT DE RECHERCHE EUROPEENNE

EP 80 40 1453

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernée | |
| | FR - A - 2 404 326 (SIEMENS)<br>* Page 1, lignes 19-26; page 2, lignes 1-10; page 3, lignes 4-16; page 5, ligne 2-10 *<br>-- | 1,8 | H 02 J 13/00 |
| | CH - A - 568 671 (LGZ)<br>* Colonne 2, lignes 1-59; figure *<br>-- | 1,5,8,12 | |
| P | US - A - 4 185 205 (N. JAGODA)<br>* Abrégé; colonne 1, ligne 14-24; colonne 2, lignes 21-68; colonne 3, ligne 59 - colonne 5, ligne 47; figure 1 *<br>---- | 1,3,8,10 | DOMAINES TECHNIQUES RECHERCHES (Int. Cl. 3)<br>H 02 J 13 |

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

X Le présent rapport de recherche a été établi pour toutes les revendications

| Lieu de la recherche | Date d'achèvement de la recherche | Examinateur |
|---|---|---|
| La Haye | 06-02-1981 | V. HELOT |